# EUROPÄISCHE PATENTSCHRIFT

(11) **EP 1 249 267 B1**
(45) Veröffentlichungstag und Bekanntmachung des Hinweises auf die Patenterteilung: **08.02.2006**
(21) Anmeldenummer: 02006410.1
(22) Anmeldetag: 21.03.2002
(51) Int. Cl.: B01D 57/00, G01N 30/00, B01D 61/00

(54) **Vorrichtung zur Fluss-Feldflussfraktionierung**
Device for flow field-flow fractionation
Dispositif pour le fractionnement par couplage flux-force par flux croisés

(30) Priorität: 10.04.2001 DE 10117863
(43) Veröffentlichungstag der Anmeldung: 16.10.2002
(73) Patentinhaber: Schupp, Wolfgang, Dr., 55437 Ober-Hilbersheim (DE)
(72) Erfinder: Schupp, Wolfgang, Dr., 55437 Ober-Hilbersheim (DE)
(74) Vertreter: Teipel, Stephan

(56) Entgegenhaltungen:
- EP-A- 1 067 380
- DE-U- 29 720 229
- US-A- 4 737 268
- JOSEF CHMELÍK: "Different elution modes and field programming in gravitational field-flow fractionation - I. A theorical approach" JOURNAL OF CHROMATOGRAPHY A, ELSEVIER SCIENCE, NL, Bd. 845, Nr. 1-2, 11. Juni 1999 (1999-06-11), Seiten 285-291, XP004170360 ISSN: 0021-9673

## Beschreibung

Die Erfindung betrifft eine Vorrichtung zur Fluß-Feldflußfraktionierung einer Mischung aus einem Fluid mit darin vorliegenden Komponenten, umfassend ein Unterteil, ein Oberteil, einen flachen Strömungskanal zwischen dem Unterteil und dem Oberteil und eine Membran, die zumindest einen Teil des Strömungskanals begrenzt und durch die ein Teil des Fluids zu einem Querfluß-Auslaß gelangen kann. Die Erfindung betrifft insbesondere eine Vorrichtung der vorstehend bezeichneten Art, die zur präparativen Fraktionierung von Komponenten geeignet ist.

Vorrichtungen zur Fluß-Feldflußfraktionierung sind im Stand der Technik bekannt. Bei der Fluß-Feldflußfraktionierung handelt es sich um eine Subtechnik der Feldflußfraktionierung. Die Feldflußfraktionierung stellt ein analytisches Verfahren dar, welches zur Bestimmung der Teilchengröße, des Molekulargewichts und der Größenverteilung von suspendierten und gelösten Substanzen geeignet ist.

Das Funktionsprinzip der Feldflußfraktionierung ist wie folgt: Die zu untersuchende Substanz wird mit der Strömung einer Trägerflüssigkeit durch einen dünnen Kanal (50 µm bis 500 µm) befördert. In diesem dünnen Kanal bildet sich dabei eine laminare Strömung aus, wobei die Fließgeschwindigkeit an den Wandungen des Kanals geringer ist als in der Kanalmittel. Quer zu dem Durchfluß wird dann ein Kraftfeld angelegt. Wenn die Teilchenprobe auf die angelegte Kraft anspricht, werden sich die Teilchen in der Teilchenprobe in Richtung auf eine sogenannte Ansammlungswand des Kanals hin bewegen. Bei der Fluß-Feldflußfraktionierung erzielt man die Trennung der Teilchen der Probe durch Anwendung einer zusätzlichen Strömung der Trägerflüssigkeit, die senkrecht zum Durchfluß der Probe orientiert ist und hierbei die Rolle der treibenden Kraft spielt. Der quer zur Strömung der Trägerflüssigkeit verlaufende, sogenannte Querfluß wird erzeugt, indem der Arbeitskanal lateral zur Flußrichtung der Trägerflüssigkeit durch mindestens eine sogenannte Fritte begrenzt ist. Hierbei handelt es sich um einen porösen Festkörper, der zusätzlich durch eine semipermeable Membran von dem Arbeitskanal getrennt ist. Diese semipermeable Membran läßt nur die Trägerflüssigkeit durch, verhindert jedoch ein Durchtreten der zu untersuchenden Teilchen.

Die zur Durchführung der Fluß-Feldflußfraktionierung verwendeten Fluß-Feldflußfraktionierer können symmetrisch oder asymmetrisch ausgebildet sein. Eine symmetrische Fluß-Feldflußfraktionierung bedeutet, daß der Arbeitskanal auf beiden Seiten eine semipermeable Membran mit dahinterliegender Fritte aufweist. Durch die Membranen wird quer zu der laminaren Hauptströmung eine Querströmung erzeugt, indem dem Strömungskanal durch die eine Membran seitlich Trägerflüssigkeit zugeführt und über die gegenüberliegende Membran seitlich abgeführt wird. Dies hat zur Folge, daß in der Trägerflüssigkeit enthaltene Stoffe mit unterschiedlichen Diffusionskoeffizienten in verschiedenen laminaren Schichten der Hauptströmung angereichert werden. Da die laminaren Strömungsschichten unterschiedliche Fließgeschwindigkeiten aufweisen, findet man die zu trennenden Stoffe in Strömungsrichtung beim Verlassen des Strömungskanals in zeitlicher Folge nacheinander angereichert. Damit kann die Detektion einzelner Stoffe erfolgen.

Bei der asymmetrischen Fluß-Feldflußfraktionierung wird die semipermeable Membran mit der dahinterliegenden Fritte nur auf einer Seite des Arbeitskanals zur Verfügung gestellt, während die andere Seite des Arbeitskanals durch eine undurchlässige Wand gebildet wird. Bei dieser Variante diffundiert ein Teil der Trägerflüssigkeit der Hauptströmung zur Erzeugung der Querströmung durch die Membran und die erzeugte Querströmung führt wiederum dazu, daß die in der Trägerflüssigkeit enthaltenen Stoffe mit unterschiedlichen Diffusionskoeffizienten in verschiedenen laminaren Schichten der Hauptströmung angereichert werden und so durch die unterschiedlichen Fließgeschwindigkeiten der laminaren Strömungsschichten aufgetrennt werden. Eine entsprechende Vorrichtung zur Fluß-Feldflußfraktionierung wurde erstmals von J.J. Kirkland et al. im Journal of Chromatography 1992 auf den Seiten 339-355 beschrieben. Weiterentwicklungen dieser grundlegenden Anordnung, die sich insbesondere mit dem Problem der Schaffung einer besonders gleichmäßigen Dicke des Strömungskanals beschäftigen, die für eine stabile laminare Strömungsschichtung der Hauptströmung wesentlich ist, sind beispielsweise in den deutschen Offenlegungsschriften DE-A 44 14 826 und DE-A 198 08 992 sowie in dem deutschen Gebrauchsmuster DE 297 20 229 offenbart.

Die europäische Patentanmeldung EP-A-1 067 380 beschreibt eine Vorrichtung zur gleichzeitigen Untersuchung von mindestens zwei Proben mittels der Methode der FeldflußFraktionierung, wobei die Vorrichtung mindestens zwei Trennkanäle mit je mindestens einem Einlaß und mindestens einem Auslaß aufweist.

Die aus dem vorstehend genannten Stand der Technik bekannten Vorrichtungen zur Fluß-Feldflußfraktionierung weisen den gemeinsamen Nachteil auf, daß aufgrund der Abmessung des Strömungskanals die Trägerflüssigkeitsmenge, die pro Zeiteinheit durch einen Fluß-Feldflußfraktionierer geleitet werden kann, nur relative gering ist. Daraus folgt, daß diese Vorrichtungen praktisch nur für Analysezwecke eingesetzt werden können, für die bereits die Auftrennung geringer Substanzmengen ausreichend ist. Die semi-präparative oder präparative Auftrennung von Substanzgemischen würde demgegenüber eine wesentliche Erhöhung der Durchsatzrate erfordern.

Eine Erhöhung der Durchsatzrate stößt bei Fluß-Feldflußfraktionierern herkömmlicher Bauart jedoch schnell an technische und physikalische Grenzen. So kann die Durchflußgeschwindigkeit durch den Strömungskanal nicht mehr wesentlich erhöht werden, da aufgrund der geringen Höhe des Strömungskanals sehr hohe Drücke auftreten, die nicht beliebig gesteigert werden können. Umgekehrt kann die Höhe des Strömungskanals nicht vergrößert werden, da dies die für die Auftrennung der Substanzen notwendigen stabilen laminaren Strömungsschichten in der Hauptströmung negativ beeinflussen würde. Schließlich ist eine Erhöhung der Konzentration der aufzutrennenden Substanzen in der Trägerflüssigkeit meist auch nicht zweckmäßig, da hohe Konzentrationen einer Substanz am Wandbereich des Strömungskanals eine Rückdiffusion dieser Substanz zur Mitte des Strömungskanals begünstigt und dadurch die Trennleistung des Fluß-Feldflußfraktionierers beeinträchtigt.

Eine Aufgabe der vorliegenden Erfindung besteht somit darin, eine Vorrichtung zur Fluß-Feldflußfraktionierung der eingangs genannten Art zur Verfügung zu stellen, die die obengenannten Nachteile vermeidet. Insbesondere soll eine Vorrichtung zur Fluß-Feldflußfraktionierung zur Verfügung gestellt werden, die eine präparative oder semi-präparative Auftrennung von Stoffgemischen ermöglicht.

Es wurde nun gefunden, daß diese Aufgabe dadurch gelöst werden kann, daß man eine Vorrichtung zur Fluß-Feldflußfraktionierung der eingangs genannten Art mit einem im wesentlichen runden, scheibenförmigen flachen Strömungskanal, dem etwa in dessen Mitte ein gemeinsamer Auslaß für die Mischung aus Fluid und Komponenten zugeordnet ist, und mindestens vier auf einem Kreisumfang beabstandeten Einlässen für die Mischung aus einem Fluid und darin vorliegenden Komponenten ausstattet.

Die vorliegende Erfindung betrifft somit eine Vorrichtung zur Fluß-Feldflußfraktionierung einer Mischung aus einem Fluid mit darin vorliegenden Komponenten, umfassend ein Unterteil, ein Oberteil, einen flachen Strömungskanal zwischen dem Unterteil und dem Oberteil und eine Membran, die zumindest einen Teil des Strömungskanals begrenzt und durch die ein Teil des Fluids zu einem Querfluß-Auslaß gelangen kann, dadurch gekennzeichnet, daß die Vorrichtung einen im wesentlichen runden, scheibenförmig flachen Strömungskanal umfaßt, dem etwa in dessen Mitte ein gemeinsamer Auslaß für die Mischung aus Fluid und Komponenten zugeordnet ist, und daß die Vorrichtung mindestens vier auf einem Kreisumfang beabstandete Einlässe für die Mischung aus Fluid und Komponenten aufweist.

Die erfindungsgemäße Vorrichtung eignet sich zum Auftrennen eines Gemisches aus verschiedenen Komponenten, wie beispielsweise Pigmente, Füllstoffe, Bindemittel, fertige Lacke, Polymere oder biologische Substanzen, wie insbesondere Zellen, Viren oder Proteine. Diese aufzutrennenden Gemische werden in einem Fluid als Trägersubstanz in die erfindungsgemäße Vorrichtung eingebracht. Als Fluid werden bevorzugt Flüssigkeiten verwendet, jedoch ist grundsätzlich auch die Verwendung eines gasförmigen Fluids denkbar.

Bevorzugt wird Wasser, dem beispielsweise Biozide wie Na₃N, Stabilisatoren wie Natriumpolyphosphat oder Tenside wie Natriumdodecylsulfat zugesetzt sein können. Alternativ kann beispielsweise Tetrahydrofuran als Fluid eingesetzt werden.

Unter "Mischung aus Fluid mit darin vorliegenden, aufzutrennenden Komponenten" wird vorliegend ein Gemisch, eine Suspension und/oder eine Lösung verstanden. Die Begriffe "Mischung" und "Gemisch" werden als Kurzform hierfür verwendet, beziehen sich jedoch immer auf alle möglichen Ausgestaltungen der Mischung.

Die Mischung aus Fluid mit den darin vorliegenden, aufzutrennenden Komponenten wird durch mindestens vier Einlässe in die Vorrichtung eingebracht und strömt durch den flachen Strömungskanal zu einem für sie vorgesehenen Auslaß. Der Strömungskanal sollte eine Höhe im Bereich von 50-1000 µm und vorzugsweise von 100-500 µm aufweisen, damit sich in dem Strömungskanal ein laminares Strömungsprofil ausbilden kann. Die entstehenden stabilen laminaren Strömungsschichten weisen unterschiedliche Geschwindigkeiten auf, wobei sich die in der Kanalmittel befindlichen Strömungsschichten schneller bewegen als die Strömungsschichten in der nähe der Kanalwände.

Die vorzugsweise auf dem Unterteil der erfindungsgemäßen Vorrichtung angeordnete Membran ist für das eingesetzte Fluid durchlässig, nicht jedoch für die Komponenten des aufzutrennenden Gemisches. Dadurch tritt ein Teil des Fluids durch die Membran aus dem Strömungskanal aus und erzeugt so eine Querströmung in dem Kanal. Diese Querströmung veranlaßt die verschiedenen Komponenten des aufzutrennenden Gemisches sich unterschiedlich schnell auf die Membran zuzubewegen. Hierdurch reichern sich die Komponenten, die durch die Querströmung stärker beeinflußt werden, in wandnahen Bereichen des Strömungskanals und somit in langsameren Strömungsschichten der Hauptströmung an. Entsprechend verlassen diese Komponenten die erfindungsgemäße Vorrichtung durch den für die Mischung aus Fluid und Komponenten vorgesehenen Auslaß zeitlich später als die Komponenten, die durch die Querströmung weniger beeinflußt werden und die sich damit in vergleichsweise höherer Konzentration in den schnelleren Strömungsschichten in der Kanalmitte befinden. Hierdurch kommt es zu einer Auftrennung des Komponentengemisches. Der Teil des Fluids, der durch die Membran den Strömungskanal verläßt, tritt durch den Querfluß-Auslaß aus der erfindungsgemäßen Vorrichtung aus.

Eine wesentliche Steigerung der Durchflussmenge pro Zeiteinheit ist mit den im Stand der Technik bekannten Vorrichtungen zur Fluß-Feldflußfraktionierung aus den eingangs geschilderten Gründen nicht möglich. Demgegenüber wurde erfindungsgemäß gefunden, daß eine Steigerung der Durchsatzrate möglich ist, wenn die Mischung aus Fluid und Komponenten durch mindestens vier Einlässe in die Vorrichtung eingebracht wird. Dies ist besonders dann vorteilhaft, wenn die Querströmung in dem Strömungskanal ausschließlich durch Austreten von Fluid durch die Membran erzeugt wird (asymmetrische Fluß-Feldflußfraktionierung), d.h. daß durch die der Membran gegenüberliegende Wand der erfindungsgemäßen Vorrichtung kein zusätzliches Fluid durch eine zweite Membran in den Strömungskanal eingebracht wird, wie es bei einer symmetrischen Fluß-Feldflußfraktionierung notwendig wäre. Durch den ausschließlichen Austritt von Fluid aus dem Strömungskanal wird nämlich die Gesamtmenge des Fluids kontinuierlich vom Einlaß in den Strömungskanal bis zum Auslaß aus dem Strömungskanal verringert, so daß trotz der Zufuhr der Mischung aus Fluid und aufzutrennenden Komponenten über mindestens vier Einlässe die Fluidmenge mit den aufgetrennten Komponenten am dafür vorgesehenen Auslaß geringer oder höchstens gleich ist. Hierdurch kann die Menge der Mischung aufzutrennender Komponenten, die in einer vorgegebenen Zeiteinheit in der erfindungsgemäßen Vorrichtung aufgetrennt werden kann, gegenüber herkömmlichen Vorrichtungen gesteigert werden.

Unter "Einlaß/Auslaß für die Mischung aus Fluid und Komponenten" wird vorliegend die Stelle der Vorrichtung verstanden, an der die Mischung aus Fluid und Komponenten in den Strömungskanal eintritt/austritt.

Durch eine weitere Steigerung der Anzahl der Einlässe für die Mischung aus Fluid und aufzutrennenden Komponenten kann die Trennleistung der erfindungsgemäßen Vorrichtung sogar noch weiter gesteigert werden. Daher umfaßt die Vorrichtung vorzugsweise mindestens 6 und am bevorzugtesten mindestens 12 Einlässe für die Mischung aus Fluid und Komponenten. Es versteht sich, daß zur Erleichterung der Handhabung der erfindungsgemäßen Vorrichtung die Einlässe über eine gemeinsame Zufuhrleitung miteinander verbunden sein können, über die beispielsweise mittels einer Pumpe die Mischung aus Fluid und aufzutrennenden Komponenten gleichzeitig allen Einlässen zugeführt werden kann.

Das durch die Einlässe dem runden, scheibenförmigen Strömungskanal zugeführte Gemisch aus Fluid und aufzutrennenden Komponenten strömt von den Rändern des Strömungskanals zu dessen Mitte, wo es aus dem dafür vorgesehenen Auslaß austritt. Gleichzeitig tritt ein Teil des Fluids durch die vorzugsweise auf dem Unterteil der Vorrichtung angeordnete Membran hindurch, so daß sich die Gesamtmenge des Fluids zur Mitte des Strömungskanals hin verringert. Hierdurch wird zum einen eine unkontrollierte Erhöhung des Drucks in dem Strömungskanal verhindert und zum anderen wird die Konzentration der aufzutrennenden Komponenten in dem Fluid erhöht, so daß in vorteilhafterweise die gewünschten aufgetrennten Komponenten beim Verlassen der erfindungsgemäßen Vorrichtung bereits in höherer Konzentration vorliegen.

Der im wesentlichen runde, scheibenförmig flache Strömungskanal ist vorzugsweise möglichst exakt rund und der Auslaß für die Mischung aus Fluid und Komponenten befindet sich vorzugsweise möglichst exakt in der Mitte des runden Strömungskanals, damit die Wege, die das Fluid von seinen mindestens zwei Einlässen zu dem Auslaß zurückzulegen hat, möglichst gleich lang sind. Bei entsprechender Justierung beispielsweise der Drücke, mit denen das Fluid durch die Einlässe in den Strömungskanal eingebracht wird, kann die Form des Strömungskanals jedoch auch variiert werden und beispielsweise eine verzerrte Kreisform wie eine Ovalform annehmen. Außerdem kann die Kreisform des Strömungskanals beispielsweise jeweils an den Stellen der Einlässe für die Mischung aus Fluid und Komponenten durch Formelemente radial erweitert sein, beispielsweise durch Ausbuchtungen wie Kreisabschnitte, Dreiecke oder Rechtecke.

Der im wesentlichen runde, scheibenförmig flache Strömungskanal weist vorzugsweise einen Radius im Bereich von 2,5-50 cm und besonders bevorzugt von 5-20 cm auf.

In einer bevorzugten Ausführungsform der erfindungsgemäßen Vorrichtung mit dem im wesentlichen runden, scheibenförmig flachen Strömungskanal umfaßt diese mindestens vier und besonders bevorzugt 12 auf einem Kreisumfang beabstandete Einlässe für die Mischung aus Fluid und Komponenten, die so angeordnet sind, daß dem Strömungskanal möglichst gleichmäßig von allen Seiten die Mischung aus Fluid und Komponenten zugeführt wird, die dann zum Zentrum des Strömungskanals strömt, um dort aus dem Auslaß wieder auszutreten. Um eine möglichst gleichmäßige Zufuhr von Fluid und aufzutrennenden Komponenten zu gewährleisten, sollten die Abstände zwischen jeweils zwei auf dem Kreisumfang beabstandeten Einlässe etwa gleich groß sein.

Um eine gleichmäßige Strömung in dem Strömungskanal der erfindungsgemäßen Vorrichtung aufrecht zu erhalten, ist es vorteilhaft, wenn jedem Einlaß für die Mischung aus Fluid und aufzutrennenden Komponenten ein weitere Einlaß zugeordnet ist, durch den ausschließlich Fluid in den Strömungskanal eingebracht wird. Dieser zusätzliche Einlaß sollte sich in Strömungsrichtung vor dem Einlaß für die Mischung aus Fluid und Komponenten befinden, damit sich an der Stelle, an der die Mischung aus Fluid und Komponenten in den Strömungskanal eingebracht wird, bereits eine laminare Fluidströmung ausgebildet hat.

In der erdfindungsgemäß bevorzugten Ausführungsform enthält der im wesentlichen runde, scheibenförmig flache Strömungskanal keinerlei Elemente, die die gleichmäßige laminare Strömung des Fluids von den auf einem Kreisumfang angeordneten Einlässen zu dem Auslaß in der Mitte des Strömungskanals behindem könnten. Alternativ kann der im wesentlichen runde, scheibenförmig flache Strömungskanal jedoch auch beispielsweise durch eine oder mehrere Trennwände in einzelne Segmente unterteilt sein. Beispielsweise können jedem der mindestens vier Einlässe für die Mischung aus Fluid und aufzutrennendem Komponenten zwei Trennwände zugeordnet sein, die den Strömungskanal vom Einlaß zum Auslaß in Strömungsrichtung rechts und links begrenzen. Der Abstand der beiden Trennwände verringert sich vorzugsweise in Richtung des Auslasses für die Mischung aus Fluid und Komponenten, so daß sich die in dem im wesentlichen runden, scheibenförmig flachen Strömungskanal durch die Trennwände gebildeten Kanalsegmente jeweils in Richtung des Auslasses für die Mischung aus Fluid und Komponenten verjüngen und, wenn mehr als zwei Kanalsegmente vorhanden sind, spitz aufeinander zulaufen.

Wenn der im wesentlichen runde, scheibenförmig flache Strömungskanal in mehrere Kanalsegmente durch Trennwände unterteilt ist, kann es zweckmäßig sein, jedes einzelne Kanalsegment rautenförmig auszubilden, wobei sich der Einlaß für die Mischung aus Fluid und aufzutrennenden Komponenten in der dem spitzen Ende der Raute gegenüberliegenden flacheren Spitze befindet.

Vorzugsweise teilen sich jeweils zwei benachbarte Kanalsegmente in dem im wesentlichen runden, scheibenförmig flachen Strömungskanal eine Trennwand, d.h. die linke Seite einer Trennwand stellt in Strömungsrichtung die rechte Begrenzung eines Kanalsegments dar und die rechte Seite derselben Trennwand bildet die linke Begrenzung des dem ersten Kanalsegment rechts benachbarten Kanalsegments. Es ist jedoch auch möglich, daß jedes Kanalsegment durch eigene Trennwände begrenzt wird. Dies ermöglicht es zum Beispiel wenn gewünscht Lücken zwischen den einzelnen Kanalsegmenten zu belassen, so daß diese in ihrer Anordnung variiert werden können. Im Grenzfall umfaßt die erfindungsgemäße Vorrichtung dann vier Strömungskanäle, denen jeweils ein Einlaß für die Mischung aus Fluid und Komponenten und ein gemeinsamer Auslaß für die Mischung aus Fluid und Komponenten zugeordnet ist. Vorzugsweise umfaßt die erfindungsgemäße Vorrichtung dann jedoch eine Vielzahl von Strömungskanälen, beispielsweise sechs oder 12 Strömungskanäle. Zur platzsparenden Anordnung sollten diese Strömungskanäle, deren Breite sich vorzugsweise in Richtung des Auslasses für die Mischung aus Fluid und Komponenten verringert, kreisförmig um einen Auslaß für die Mischung aus Fluid und Komponenten anordnen.

Die Membran, durch die ein Teil des Fluids zu einem Querfluß-Auslaß gelangen kann, um so durch den Fluidaustritt aus dem Strömungskanal eine Querströmung zu erzeugen, kann sowohl am Oberteil als auch am Unterteil der erfindungsgemäßen Vorrichtung angeordnet sein. Sie sollte zumindest einen Teil, vorzugsweise etwa den gesamten Strömungskanal auf seiner Ober- oder Unterseite begrenzen.

Wenn die mindestens vier Einlässe für die Mischung aus Fluid und Komponenten bereits im Oberteil der Vorrichtung angeordnet sind, wird die Membran vorteilhaft auf dem Unterteil angeordnet und zwar so, daß sie den Strömungskanal nach unten begrenzt. Nach oben wird der Strömungskanal dann durch eine möglichst glatte, fluidundurchlässige Wand des Oberteils der Vorrichtung begrenzt sein.

Die Membran kann beispielsweise aus Cellulose, Polysulfon oder Polypropylen hergestellt sein. Da entsprechende Membranen alleine den bei der Fluß-Feldflußfraktionierung auftretenden hohen Drücken zumeist nicht standhalten, werden sie vorteilhaft auf einem fluiddurchlässigen Körper wie einer Fritte, beispielsweise aus Polyethylen mit einer Porenweite von beispielsweise 5-15 x 10⁻⁶m angeordnet. Die Fritte kann auch aus Glas, Porzellan, gesintertem Metall oder Metalloxidpulver bestehen.

Der Strömungskanal wird beim Zusammenfügen von Oberteil und Unterteil durch einen Abstandshalter gebildet, der die Dicke des Strömungskanals bestimmt. Beispielsweise eignet sich als Abstandshalter eine Folie, die eine Aussparung in der gewünschten Strömungskanalform aufweist. Die Folie kann beispielsweise aus Teflon, Polyester oder Polyamid bestehen.

Da es für eine hohe Trennleistung bei der Fluß-Feldflußfraktionierung wesentlich ist, daß die Ober- und Unterseite des Strömungskanals möglichst exakt planar ausgerichtet sind, ist es vorteilhaft, wenn die Ausrichtung zumindest einer der beiden Wandbegrenzungen auch nach Zusammenfügen von Ober- und Unterteil der Vorrichtung noch nachjustiert werden kann. Hierzu kann die Vorrichtung beispielsweise so ausgebildet sein, daß auf der dem Strömungskanal abgewandten Seite der Membran eine Sammlerplatte und eine Fritte so angeordnet sind, daß die Sammlerplatt sich an dem Ober- oder Unterteil abstützenden auf die Fritte preßbar ist. Durch eine Justierung der Sammlerplatte kann dann auch nach dem Zusammenfügen von Ober- und Unterteil die exakte Ausrichtung der Membran nachjustiert werden. Eine entsprechende Ausführungsform ist in dem deutschen Gebrauchsmuster DE 297 20 229 U1 ausführlich beschrieben und der Inhalt dieses Gebrauchsmusters wird durch Bezugnahme in die vorliegende Beschreibung aufgenommen.

Durch die erfindungsgemäße Vorrichtung zur Fluß-Feldtlußfraktionierung kann die Fraktionierleistung gegenüber herkömmlichen Fluß-Feldflußfraktionierern bereits erheblich gesteigert werden. Um die Fraktionierleistung jedoch noch weiter zu erhöhen und damit eine Vorrichtung zur Verfügung zu stellen, die sich noch besser zur präparativen oder semi-präparativen Fluß-Feldflußfraktionierung einer Mischung aus einem Fluid mit darin vorliegenden Komponenten eignet, kann es jedoch vorteilhaft sein, mehrere der vorstehend beschriebenen Vorrichtungen miteinander zu koppeln. Dies kann beispielsweise dadurch geschehen, daß man einfach mehrere der beschriebenen erfindungsgemäßen Vorrichtungen nebeneinander anordnet und deren Auslaßströme vereinigt. Vorteilhaft werden die erfindungsgemäßen Vorrichtungen jedoch so angeordnet, daß jeweils das Oberteil einer Vorrichtung flächig an das Unterteil der benachbarten Vorrichtung, sofern vorhanden, angrenzt.

Die vorliegende Erfindung umfaßt somit auch einen Fraktionierer zur präparativen oder semi-präparativen Fluß-Feldflußfraktionierung einer Mischung aus einem Fluid mit darin vorliegenden Komponenten, dadurch gekennzeichnet, daß der Fraktionierer mindestens zwei Vorrichtungen der vorstehend beschriebenen Art umfaßt, die so angeordnet sind, daß jeweils das Oberteil einer Vorrichtung flächig an das Unterteil der benachbarten Vorrichtung, sofern vorhanden, angrenzt.

Diese gepackte Anordnung mehrerer erfindungsgemäßer Vorrichtungen in einem Fraktionierer hat den Vorteil, daß sich die bei der Fluß-Feldflußfraktionierung auftretenden hohen Drücke und die damit auf das Oberteil und das Unterteil einer Vorrichtung wirkenden hohen Biegekräfte benachbarter Vorrichtungen kompensieren oder zumindest nahezu kompensieren. Lediglich an die entsprechenden Endplatten ist wieder die ursprünglich hohe Anforderung an deren Stabilität zu stellen. Die in dem erfindungsgemäßen Fraktionierer zusammengefügten Einzelvorrichtungen zur Fluß-Feldflußfraktionierung können somit gegenüber herkömmlichen Fluß-Feldflußfraktionierern wesentlich einfacher und kostengünstiger ausgestaltet sein, da nicht jede Einzelvorrichtung dem auftretenden hohen Druck stand zu halten braucht.

In dem erfindungsgemäßen Fraktionierer könne zwei oder mehr vorstehend beschriebene Vorrichtungen als im Prinzip voneinander trennbare Einzelvorrichtungen angeordnet sein. In einer alternativen Ausführungsform kann jedoch auch das Oberteil einer Vorrichtung gleichzeitig das Unterteil der nächsten Vorrichtung, sofern vorhanden, sein.

Herkömmlicherweise weisen Fluß-Feldflußfraktionierer sowohl an ihrer Ober- als auch an ihrer Unterseite Elemente auf, die vor oder während der Fraktionierung zugänglich sein müssen. Beispielsweise wird der Querflußauslaß üblicherweise nach unten herausgeführt. Außerdem können sich an der Unterseite beispielsweise Justierschrauben befinden. Entsprechende Vorrichtungen eignen sich nicht für den erfindungsgemäßen Fraktionierer, da sie eine Stapelung der Einzelvorrichtungen nicht zulassen.

Dementsprechend besteht ein weiterer Aspekt der vorliegenden Erfindung darin, einen Fluß-Feldflußfraktionierer zur Verfügung zu stellen, bei dem zumindest alle Ein- und Auslässe so angeordnet sind, daß sie eine Stapelung der Einzelvorrichtungen zulassen.

Erfindungsgemäß wurde nun gefunden, daß eine entsprechende Vorrichtung zur Fluß-Feldflußfraktionierung dadurch zur Verfügung gestellt werden kann, daß die Vorrichtung ein Unterteil mit einer darauf angeordneten Membran durch die ein Teil des Fluids zu mindestens einem Querfluß-Auslaß gelangen kann, ein Oberteil, einen flachen Strömungskanal zwischen der Membran und dem Oberteil, mindestens einen Einlaß für die Mischung aus Fluid und Komponenten und mindestens einen Auslaß für die Mischung aus Fluid und Komponenten umfaßt, wobei die Ein- und Auslässe am Oberteil angeordnet sind. Hierzu ist es notwendig, daß der Querfluß, der durch die Membran in das Unterteil der Vorrichtung gelangt, außerhalb des Strömungskanals in das Oberteil der Vorrichtung und dort bevorzugt seitlich nach außen geführt wird.

Die vorliegende Erfindung wird nun anhand der beiliegenden Figuren näher erfäutert. In diesen zeigt
- **Figur 1**: einen seitlichen Querschnitt durch eine erfindungsgemäße Vorrichtung zur Fluß-Feldflußfraktionierung,
- **Figur 2**: einen Längsschnitt durch das Oberteil einer erfindungsgemäßen Vorrichtung zur Fluß-Feldflußfraktionierung mit einem im wesentlichen runden, scheibenförmig flachen Strömungskanal,
- **Figur 3**: einen Längsschnitt durch das Oberteil einer erfindungsgemäßen Vorrichtung zur Fluß-Feldflußfraktionierung mit einem in wesentlichen runden, scheibenförmig flachen Strömungskanal, der durch Trennwände in Kanalsegmente unterteilt ist,
- **Figur 4**: einen Querschnitt durch eine alternative Ausführungsform der erfindungsgemäßen Vorrichtung zur Fluß-Feldflußfraktionierung,
- **Figur 5**: einen Querschnitt durch eine weitere alternative Ausführungsform der erfindungsgemäßen Vorrichtung zur Fluß-Feldflußfraktionierung, bei der sich alle Ein- und Auslässe seitlich am Oberteil befinden.
- **Figur 6**: einen Querschnitt durch eine weitere alternative Ausführungsform der erfindungsgemäßen Vorrichtung zur Fluß-Feldflußfraktionierung.

In den Figuren sind gleiche Merkmale der erfindungsgemäßen Vorrichtung durch gleiche Bezugszeichen gekennzeichnet. Mehrfach auftretende Merkmale wie zwei Einlässe für die Mischung aus Fluid und Komponenten sind durch ein " ' " wie beispielsweise **3** und **3'** unterschieden.

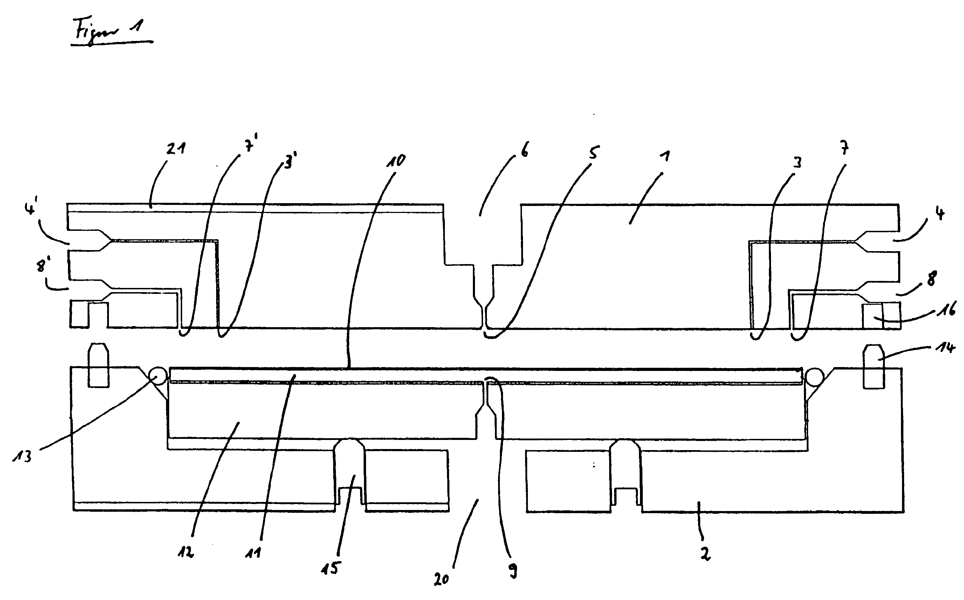

Figur 1 zeigt einen Querschnitt durch eine erfindungsgemäße Vorrichtung zur Fluß-Feldflußfraktionierung mit einem Oberteil **1,** einem Unterteil **2,** eine Membran **10,** durch die ein Teil des Fluids zu einem Querfluß-Auslaß **9** gelangen kann, und zwei Einlässe **3** und **3'** für die Mischung aus Fluid und Komponenten. Diesen Einlässen **3** und **3'** sind äußere Zuführungen **4** und **4'** zugeordnet, durch die die Mischung aus Fluid und Komponenten in die Vorrichtung und zu den Einlässen **3** und **3'** zugeleitet wird. Ferner umfaßt die Vorrichtung einen Auslaß für Fluid und Komponenten **5** sowie einem diesem Auslaß **5** zugeordnete äußere Abführung **6,** durch die die Mischung aus Fluid und Komponenten nach Auftrennung der Komponenten der Vorrichtung entnommen werden kann. Das Oberteil **1** weist eine Ausfräsung **21** auf, durch die wenn gewünscht, eine Kapillare, die mit der Abführung **6** verbunden wird, seitlich abgeführt werden kann. Durch die Einlässe **7** und **7'** wird an den äußeren Strömungskanalenden Fluid in den Strömungskanal eingebracht, das der Vorrichtung durch die äußeren Zuführungen **8** und **8'** zugeführt wird. Während des Durchströmens des Strömungskanals (hier nicht dargestellt) tritt ein Teil des Fluids durch die Membran **10** hindurch, die sich oberhalb einer Fritte **11** befindet, so daß das Fluid, das durch die Membran hindurchtritt, durch die Fritte zu dem Querfluß-Auslaß **9** und von dort zu der äußeren Abführung für den Querfluß **20** gelangen kann. Die Fritte **10** befindet sich auf einer Sammlerplatte **12,** die mittels der Justierschrauben **15** justiert werden kann. Hierdurch kann nach dem Zusammensetzen von Ober- und Unterteil die Ausrichtung der Membran **10** durch Anpressen der Fritte **11** über die Sammlerplatte **12** nachjustiert werden.

In Figur 1 ist die erfindungsgemäße Vorrichtung in einem zerlegten Zustand dargestellt, bei dem Oberteil **1** und Unterteil **2** voneinander getrennt sind. In betriebsbereitem Zustand wird das Oberteil **1** mit dem Unterteil **2** verbunden, wobei die Fixierstifte **14** in die dafür vorgesehenen Fixierstiftöffnungen **16** eingreifen, um ein leichteres Justieren von Ober- und Unterteil zu ermöglichen. Zusätzlich wird zwischen Ober- und Unterteil eine hier nicht dargestellte Trennfolie eingebracht, die einen Ausschnitt in der gewünschten Form des Strömungskanals umfaßt und die eine dem Strömungskanal entsprechende Dicke aufweist. Hierdurch wird der gewünschte Abstand zwischen Ober- und Unterteil eingehalten und der Strömungskanal wird seitlich durch die Folie begrenzt. Um während des Betriebs ein Austreten von Fluid aus der Vorrichtung zu verhindern, weist diese zusätzlichen Dichtungen **13** auf.

In Betrieb wird Fluid durch die äußeren Zuführungen **8** und **8' den** Einlässen **7** und **7' für** das Fluid zugeführt, durch die dieses an den äußeren Enden in den Strömungskanal einströmt und von beiden Seiten zur Mitte des Strömungskanals und dort zum Auslaß **5** gelangt, wobei sich in dem Strömungskanal eine laminare Strömungsschichtung ausbildet. Ein Teil des Fluids tritt durch die Membran **10** aus dem Strömungskanal aus und gelangt durch die Fritte **11** zum Querfluß-Auslaß **9** und von dort zur äußeren Abführung **20** für den Querfluß. Über die äußeren Zuführungen **4** und **4'** wird der Vorrichtung die Mischung aus Fluid und aufzutrennenden Komponenten zugeführt, die von dort über die Einlässe **3** und **3'** in den Strömungskanal gelangen. Die Komponenten werden durch den Querfluß, der durch das durch die Membran **10** austretende Fluid erzeugt wird, in den verschiedenen laminaren Strömungsschichten unterschiedlich stark angereichert und gelangen so, da sich die verschiedenen laminaren Strömungsschichten unterschiedlich schnell fortbewegen, nacheinander zum Auslaß **5,** so daß eine Auftrennung der Komponenten erfolgt.

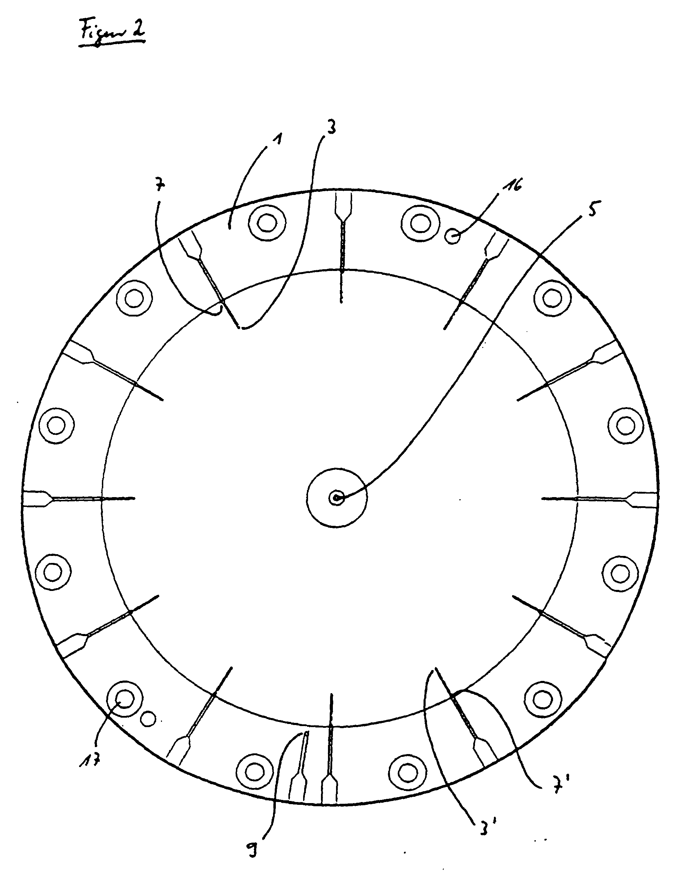

Figur 2 zeigt einen Längsschnitt durch eine erfindungsgemäß bevorzugte Vorrichtung zur Fluß-Feldflußfraktionierung mit einem im wesentlichen runden, scheibenförmig flachen Strömungskanal. Zu sehen sind die im Oberteil **1** angeordneten Komponenten der Vorrichtung. Diese weist insgesamt **12** Einlässe für die Mischung aus Fluid und Komponenten auf, von denen zwei gegenüberliegende mit **3** und **3'** gekennzeichnet sind. Diese können beispielsweise denen in Figur 1 dargestellten Einlässen **3** und **3'** entsprechen. Jedem Einlaß **3** für die Mischung aus Fluid und Komponenten ist ein Einlaß 7/7' für Fluid zugeordnet, der sich in Strömungsrichtung vor dem Einlaß **3** für die Mischung aus Fluid und Komponenten befindet.

Ferner sind in Figur 2 der Auslaß von Fluid und Komponenten **5,** der Querfluß-Auslaß **9,** zwei Fixierstiftöffnungen **16** und 12 Befestigungsschrauben **17** dargestellt.

Im Funktionszustand strömt durch die Einlässe **7** Fluid in den runden, scheibenförmig flachen Strömungskanal ein und von dort zum Auslaß **5,** der in der Mitte des Strömungskanals angeordnet ist. Ferner wird über die Einlässe **3** eine Mischung aus Fluid und Komponenten in den Fluidstrom eingebracht und von diesem in Richtung des Auslasses **5** transportiert. Die Auftrennung erfolgt wie vorstehend beschrieben.

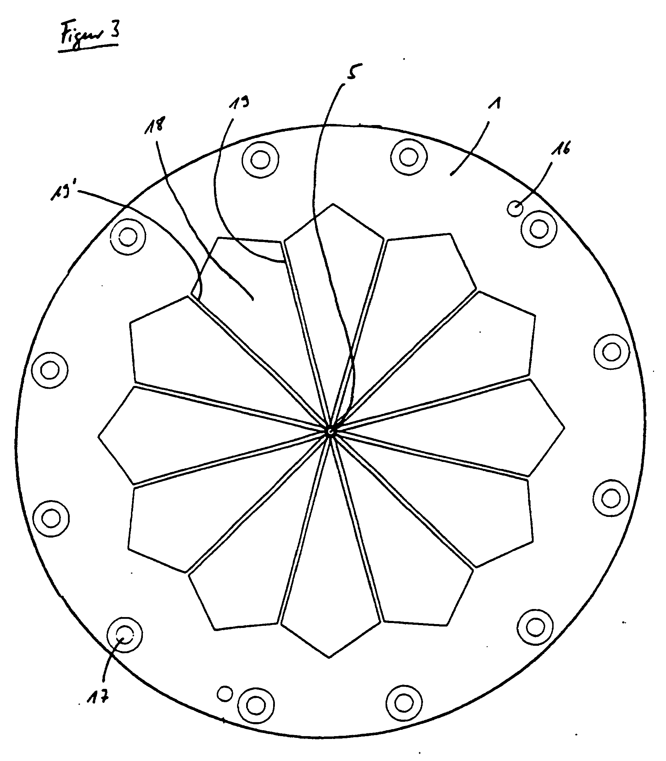

Figur 3 zeigt eine alternative Ausführungsform der in Figur 2 dargestellten Vorrichtung mit einem im wesentlichen runden, scheibenförmig flachen Strömungskanal, der hier jedoch durch Trennwände **19** und **19'** in Kanalsegmente **18** aufgeteilt ist. Jedem Kanalsegment **18** ist wie in Figur 2 gezeigt sowohl ein Einlaß 7 für Fluid als auch ein Einlaß **3** für die Mischung aus Fluid und Komponenten zugeordnet, wobei diese in Figur 3 nicht im einzelnen dargestellt sind.

Die einzelnen Kanalsegmente **18** werden in Richtung des Auslasses **5** für Fluid und Komponenten schmaler und vereinigen sich an ihren Spitzen um den gemeinsamen Auslaß **5.**

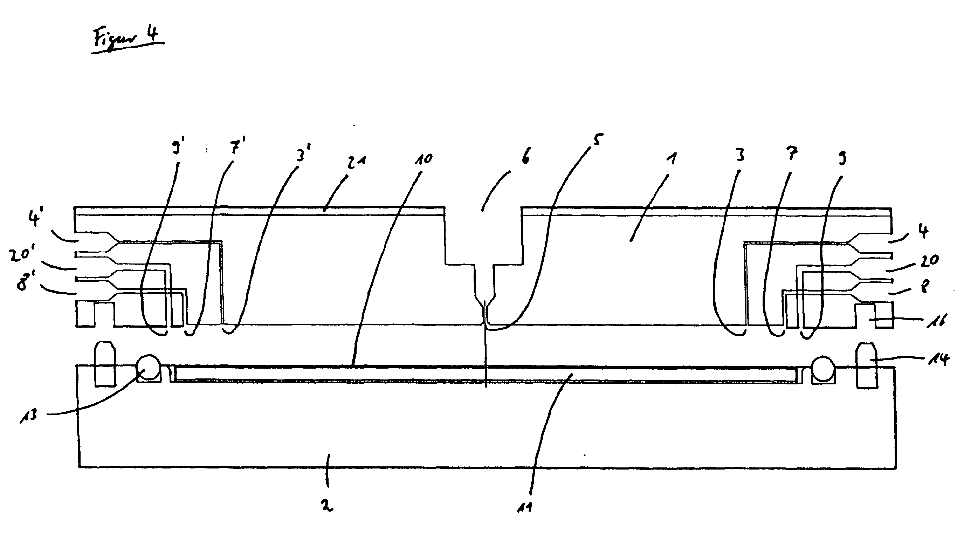

Die in Figur 1 dargestellte Ausführungsform der erfindungsgemäßen Vorrichtung zur Fluß-Feldflußfraktionierung weist, wie im Stand der Technik üblich, Bedienelemente und insbesondere die äußere Abführung **20** für den Querfluß an ihrer Unterseite auf. Dies erschwert die Handhabung derartiger Vorrichtungen. Eine erfindungsgemäß verbesserte Ausführungsform zeigt Figur 4 bei der die Abführungen **20** und **20'** für den Querfluß an dem Oberteil **1** angeordnet sind. Dies erfordert, daß sich die Querfluß-Auslässe **9** und **9'** ebenfalls am Oberteil **1** befindet. Dies wird dadurch realisiert, daß das durch die Membran **10** in die Fritte **11** durchtretende Fluid seitwärts aus der Fritte herausgeleitet wird, wo es außerhalb des Strömungskanals von dem Unterteil **2** in die Querfluß-Auslässe **9** und **9'** des Oberteils **1** gelangt.

Diese Anordnung ermöglicht es, daß alle Zu- und Abführungen am Oberteil **1** angeordnet werden können, so daß die Vorrichtung insgesamt leichter bedient werden kann. Die in Figur 4 gezeigte Ausführungsform der erfindungsgemäßen Vorrichtung weist jedoch immer noch den Nachteil auf, daß, um mehrere dieser Vorrichtungen übereinander stapeln zu können, die Abführung **6** über eine Kapillare durch eine Ausfräsung **21** zur Seite geführt werden muß.

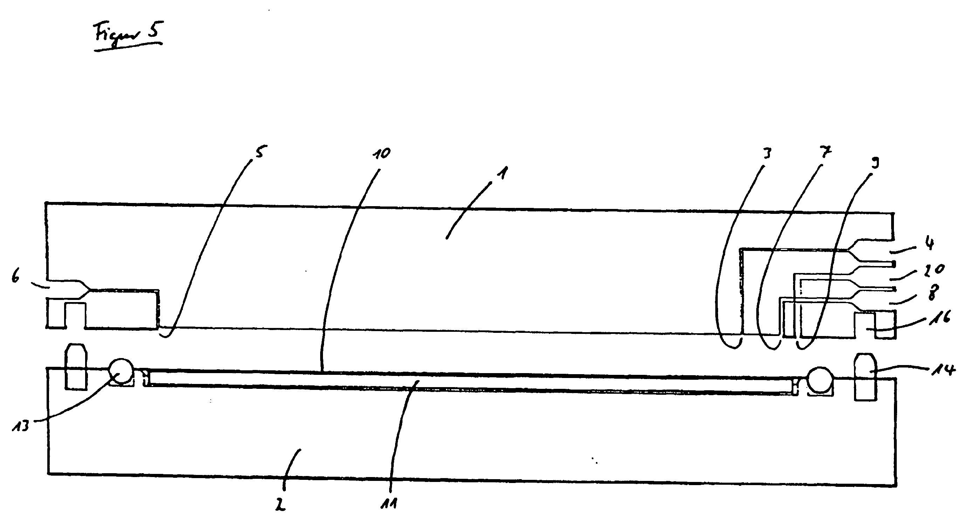

Eine entsprechend weiter verbesserte Ausführungsform, bei der sich alle äußeren Zu- und Abführungen an den Seiten des Oberteils **1** befinden, ist in Figur 5 dargestellt. Mehrere der in Figur 5 dargestellten Vorrichtungen können zu einem Fluß-Feldflußfraktionierer übereinander gestapelt werden. Dies weist den zusätzlichen Vorteil auf, daß die bei der Fluß-Feldflußfraktionierung auftretenden hohen Drücke und damit die auf Oberteil und Unterteil wirkenden Biegekräfte sich bei den innenliegenden Einzelvorrichtungen kompensieren oder zumindest nahezu kompensieren, so daß die Ober- und Unterteile der in einem Stapel innenliegenden Einzelvorrichtungen einfacher und preiswerter hergestellt werden können. Lediglich das Oberteil der zu oberst liegenden Einzelvorrichtung sowie das Unterteil der zu unterst liegenden Einzelvorrichtung müssen den hohen mechanischen Anforderungen, die üblicherweise an die Einzelteile eines Fluß-Feldflußfraktionierers gestellt werden, genügen.

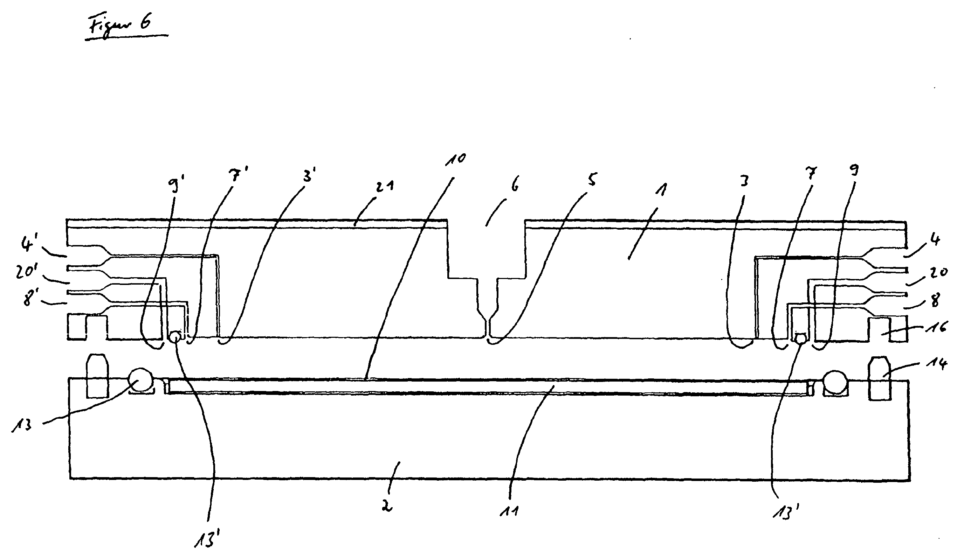

Figur 6 zeigt eine alternative Ausführungsform der erfindungsgemäßen Vorrichtung zur Fluß-Feldflußfraktionierung, die eine Verbesserung der in Figur 4 gezeigten und vorstehend beschreibenen Ausführungsform darstellt. Gegenüber der in Figur 4 gezeigten Ausführungsform weist die Vorrichtung gemäß Figur 6 zusätzliche Dichtungen **13'** auf, die ein Vermischen der in die Vorrichtung ein- und austretenden Fluidströme verhindern.

Die erfindungsgemäße Vorrichtung zur Fluß-Feldflußfraktionierung ermöglicht es, gegenüber herkömmlichen Fluß-Feldflußfraktionierern eine wesentlich größere Menge Fluid mit darin vorliegenden aufzutrennenden Komponenten pro Zeiteinheit durchzusetzen, ohne daß die Trennleistung dadurch vermindert würde. Die erfindungsgemäße Vorrichtung eignet sich somit zur semi-präparativen oder präparativen Fraktionierung von aufzutrennenden Komponenten.

## Patentansprüche

1. Vorrichtung zur Fluß-Feldflußfraktionierung einer Mischung aus einem Fluid mit darin vorliegenden Komponenten, umfassend ein Unterteil (2), ein Oberteil (1), einen flachen Strömungskanal zwischen dem Unterteil (2) und dem Oberteil (1) und eine Membran (10), die zumindest einen Teil des Strömungskanals begrenzt und durch die ein Teil des Fluids zu einem Querfluß-Auslaß (9) gelangen kann, **dadurch gekennzeichnet, daß** die Vorrichtung einen im wesentlichen runden, scheibenförmig flachen Strömungskanal umfaßt, dem etwa in dessen Mitte ein gemeinsamer Auslaß (5) für die Mischung aus Fluid und Komponenten zugeordnet ist, und daß die Vorrichtung mindestens vier auf einem Kreisumfang beabstandete Einlässe (3, 3') für die Mischung aus Fluid und Komponenten aufweist.

2. Vorrichtung nach Anspruch 1, **dadurch gekennzeichnet, daß** sie mindestens sechs und bevorzugt mindestens 12 Einlässe (3, 3') für die Mischung aus Fluid und Komponenten aufweist.

3. Vorrichtung nach einem der Ansprüche 1 oder 2, **dadurch gekennzeichnet, daß** der im wesentlichen runde, scheibenförmig flache Strömungskanal durch eine oder mehrere Trennwände (19, 19') in Kanalsegmente (18) unterteilt ist.

4. Vorrichtung nach einem der Ansprüche 1-3, **dadurch gekennzeichnet, daß** der im wesentlichen runde, scheibenförmig flache Strömungskanal einen Radius im Bereich von 2,5-50 cm, vorzugsweise 5-20 cm aufweist.

5. Vorrichtung nach einem der vorhergehenden Ansprüche, **dadurch gekennzeichnet, daß** auf der dem Strömungskanal abgewandten Seite der Membran (10) eine Sammlerplatte (12) und eine Fritte (11) so angeordnet sind, daß die Sammlerplatte (12) sich an dem Ober- oder Unterteil (1 oder 2) abstützend an die Fritte (11) preßbar ist und die Fritte (11) **dadurch** an die Membran (10) preßbar ist.

6. Vorrichtung zur Ffuß-Feldflußfraktionierung nach Anspruch 1, **dadurch gekennzeichnet, daß** die Ein- und Auslässe (3, 3', 5) am Oberteil (1) angeordnet sind.

7. Vorrichtung nach Anspruch 6, **dadurch gekennzeichnet, daß** sie äußeren Zu- und Abführungen (4, 6, 8, 20) zu den Ein- und Auslässen (3, 3', 5) seitlich am Oberteil (1) angeordnet sind.

8. Fraktionierer zur präparativen oder semi-präparativen Fluß-Feldflußfraktionierung einer Mischung aus einem Fluid mit darin vorliegenden Komponenten, **dadurch gekennzeichnet, daß** der Fraktionierer mindestens zwei Vorrichtungen nach einem der vorhergehenden Ansprüche umfaßt, die so angeordnet sind, daß jeweils das Oberteil (1) einer Vorrichtung flächig an das Unterteil (2) der benachbarten Vorrichtung, sofern vorhanden, angrenzt.

9. Fraktionierer nach Anspruch 8, **dadurch gekennzeichnet, daß** das Oberteil (1) einer Vorrichtung gleichzeitig das Unterteil (2) der nächsten Vorrichtung, sofern vorhanden, ist.

## Claims

1. A device for flow field flow fractionation of a mixture of a fluid with components present therein, comprising a lower part (2), an upper part (1), a shallow flow channel between the lower part (2) and the upper part (1) and a membrane (10), which delimits at least part of the flow channel and through which some of the fluid can arrive at a transverse flow outlet (9), **characterised in that** the device comprises a substantially circular; disc-shaped shallow flow channel with which a common outlet (5) for the mixture of fluid and components is associated approximately in its centre, and **in that** the device has at least four inlets (3, 3') for the mixture of fluid and components, which are spaced around a circular circumference.

2. A device according to Claim 1, **characterised in that** it has at least six, and preferably at least 12, inlets (3, 3') for the mixture of fluid and components.

3. A device according to one of Claims 1 and 2, **characterised in that** the substantially circular, disc-shaped shallow flow channel is divided into channel segments (18) by one or more dividing walls (19, 19').

4. A device according to one of Claims 1-3, **characterised in that** the substantially circular, disc-shaped shallow flow channel has a radius in the region of 2.5-50 cm, preferably 5-20 cm.

5. A device according to one of the preceding claims, **characterised in that**, on that side of the membrane (10) which is remote from the flow channel, a collecting plate (12) and a frit (11) are arranged such that the collecting plate (12), supported on the frit (11), can be pressed against the upper part or lower part (1 or 2) and the frit (11) can thus be pressed against the membrane (10).

6. A device for flow field flow fractionation according to Claim 1, **characterised in that** the inlets and outlets (3, 3', 5) are arranged on the upper part (1).

7. A device according to Claim 6, **characterised in that** the outer delivery and discharge channels (4, 6, 8, 20) associated with the inlets and outlets (3, 3' 5) are arranged laterally on the upper part (1).

8. A fractionation means for preparative or semi-preparative flow field flow fractionation of a mixture of a fluid with components present therein, **characterised in that** the fractionation means comprises at least two devices according to one of the preceding claims, which are arranged such that the upper part (1) of a device in each case abuts flat against the lower part (2) of the adjacent device, where present.

9. A fractionation means according to Claim 8, **characterised in that** the upper part (1) of a device is at the same time the lower part (2) of the next device, where present.

## Revendications

1. Dispositif pour le fractionnement par couplage flux-force par flux croisés d'un mélange constitué d'un fluide avec des composants présents à l'intérieur, comprenant une partie inférieure (2), une partie supérieure (1), un canal d'écoulement plat entre la partie inférieure (2) et la partie supérieure (1) et une membrane (10), qui délimite au moins une partie du canal d'écoulement et par laquelle une partie du fluide peut parvenir à une sortie de flux transversal (9), **caractérisé en ce que** le dispositif comprend un canal d'écoulement plat en forme de disque, sensiblement rond, auquel est attribuée à peu près en son centre une sortie (5) commune pour le mélange de fluide et de composants, et **en ce que** le dispositif présente au moins quatre entrées (3, 3') espacées sur une périphérie de cercle pour le mélange de fluide et de composants.

2. Dispositif selon la revendication 1, **caractérisé en ce qu'**il présente au moins six et de préférence au moins 12 entrées (3, 3') pour le mélange de fluide et de composants.

3. Dispositif selon l'une quelconque des revendications 1 ou 2, **caractérisé en ce que** le canal d'écoulement plat en forme de disque, sensiblement rond, est subdivisé par une ou plusieurs parois de séparation (19, 19') en segments de canal (18).

4. Dispositif selon l'une quelconque des revendications 1 à 3, **caractérisé en ce que** le canal d'écoulement plat en forme de disque, sensiblement rond, présente un rayon situé dans la plage de 2,5 à 50 cm, de préférence de 5 à 20 cm.

5. Dispositif selon l'une quelconque des revendications précédentes, **caractérisé en ce qu'**une plaque collectrice (12) et une fritte (11) sont disposées sur le côté, opposé au canal d'écoulement, de la membrane (10) de telle sorte que la plaque collectrice (12) peut être pressée sur la fritte (11) en s'appuyant sur la partie supérieure ou la partie inférieure (1 ou 2) et la fritte (11) peut être pressée de ce fait sur la membrane (10).

6. Dispositif pour le fractionnement par couplage flux-force par flux croisés selon la revendication 1, **caractérisé en ce que** les entrées et sorties (3, 3', 5) sont disposées sur la partie supérieure (1).

7. Dispositif selon la revendication 6, **caractérisé en ce que** les conduites d'arrivée et d'évacuation (4, 6, 8, 20) extérieures arrivant aux entrées et sorties (3, 3', 5) sont disposées sur le côté de la partie supérieure (1).

8. Fractionneur pour le fractionnement préparatif ou semi-préparatif par couplage de flux-force par flux croisés d'un mélange constitué d'un fluide avec des composants présents à l'intérieur, **caractérisé en ce que** le fractionneur comprend au moins deux dispositifs selon l'une quelconque des revendications précédentes, qui sont disposés de telle sorte qu'à chaque fois la partie supérieure (1) d'un dispositif est contiguë en surface à la partie inférieure (2) du dispositif voisin, s'il existe.

9. Fractionneur selon la revendication 8, **caractérisé en ce que** la partie supérieure (1) d'un dispositif est en même temps la partie inférieure (2) du dispositif suivant, s'il existe.
